# FASCICULE DE BREVET EUROPEEN

(11) **EP 2 024 771 B1**
(45) Date de publication et mention de la délivrance du brevet: **07.04.2010**
(21) Numéro de dépôt: 07765972.0
(22) Date de dépôt: 30.05.2007
(51) Int. Cl.: G02B 21/00, G02B 27/58

(54) **MICROSCOPE CONFOCAL INTERFÉROMÉTRIQUE**
INTERFEROMETRISCHES KONFOKALES MIKROSKOP
INTERFEROMETRIC CONFOCAL MICROSCOPE

(30) Priorité: 08.06.2006 FR 0605087
(43) Date de publication de la demande: 18.02.2009
(73) Titulaire: Centre National de la Recherche Scientifique- CNRS, 75794 Paris Cedex 16 (FR); UNIVERSITE PAUL CEZANNE AIX-MARSEILLE III, 13628 Aix en Provence Cedex 1 (FR)
(72) Inventeur: RIGNEAULT, Hervé, F-13600 La Ciotat (FR); SANDEAU, Nicolas, F-13380 Plan de Cuques (FR); GIOVANNINI, Hugues, F-13190 Allauch (FR)
(74) Mandataire: Novagraaf IP
(86) Numéro de dépôt international: PCT/FR2007/000898
(87) Numéro de publication internationale: WO 2007/141409

(56) Documents cités:
- EP-A- 1 524 491
- US-A- 5 257 089
- DONGKYUN KANG, DAEGAB GWEON: "Lateral resolution enhancement in confocal self-interference microscopy" THREE-DIMENSIONAL AND MULTIDIMENSIONAL MICROSCOPY: IMAGE ACQUISITION AND PROCESSING XII 26 JAN. 2005 SAN JOSE, CA, USA, vol. 5701, no. 1, 26 janvier 2005 (2005-01-26), pages 152-163, XP002419431 Proceedings of the SPIE - The International Society for Optical Engineering SPIE-Int. Soc. Opt. Eng USA ISSN: 0277-786X

## Description

La présente invention appartient au domaine technique des microscopes confocaux.

On connaît des microscopes confocaux pour collecter une luminescence émise par un échantillon à analyser. Dans de tels microscopes confocaux, un échantillon à analyser est placé dans le plan focal d'un objectif. La luminescence émise par l'échantillon traverse un objectif et une lentille de tube vers un trou confocal, pour être collectée au niveau d'un détecteur. Pour un microscope confocal, le trou confocal est positionné au foyer image de la lentille de tube. Dans ces microscopes confocaux connus, on détecte la luminescence sur l'ensemble de l'échantillon, soit en déplaçant l'échantillon, soit en déplaçant la zone d'observation. La luminescence de l'échantillon est par exemple émise par excitation par un faisceau laser dans le cas d'une fluorescence. Dans ce cas, on positionne dans le microscope confocal, un miroir dichroïque pour séparer la fluorescence émise par l'échantillon, et la lumière émise par le laser.

Un des problèmes majeurs des microscopes confocaux connus est la limitation de la résolution spatiale pouvant être obtenue dans l'analyse d'échantillons.

De façon connue en soi, la résolution spatiale dans un tel microscope confocal, peut être décomposée en une première partie issue de l'excitation laser, et une deuxième partie issue de la collection au niveau du trou confocal.

En effet, on comprend d'abord que l'excitation par un laser définit une zone de focalisation qui n'est pas totalement ponctuelle, et possède une certaine résolution. La zone où l'intensité du laser est maximale définit donc un volume, dit volume d'excitation.

Par ailleurs, l'image du trou confocal à travers le microscope limite le volume d'observation des molécules fluorescentes excitées. Ce volume est dit volume de collection.

La résolution spatiale d'un microscope confocal est alors fonction du volume d'observation, produit du volume d'excitation par le volume de collection.

Afin d'améliorer notamment le volume d'excitation dans une direction axiale, on connaît des microscopes confocaux dits 4π-microscopes qui ont par exemple été décrits dans la demande de brevet européen EP 0491289. Dans un tel 4π-microscope, deux objectifs sont agencés de sorte à avoir leurs plans focaux au niveau de l'objet à imager. Dans un tel dispositif, un point source réel qui n'est pas situé exactement dans le plan focal des objectifs, mais décalé d'une distance d du côté d'un objectif interfère avec un point source virtuel symétrique du point source réel par rapport au plan focal des objectifs. Ces deux points sources cohérents interfèrent de façon destructive au niveau du trou confocal. Ainsi, seuls les points source situés au niveau du plan focal des deux objectifs ne génèreront pas d'interférences destructives, de sorte qu'il est possible d'améliorer la résolution axiale du microscope.

Un tel 4π-microscope définit donc un microscope confocal pour imager une source lumineuse, ledit microscope comprenant au moins un objectif et une lentille de tube ayant un foyer image, ledit microscope comprenant des moyens d'interférence agencé pour générer des figures d'interférences à partir de ladite source lumineuse.

Dans le cas du 4π-microscope, les deux bras de l'interféromètre sont formés par les deux faisceaux issus des deux objectifs eux-mêmes.

Toutefois, un tel microscope doublement confocal possède un certain nombre d'inconvénients.

D'abord, il ne permet nullement d'améliorer la résolution latérale, c'est-à-dire perpendiculairement à l'axe optique, notamment par rapport à un microscope simplement confocal. En effet, dans un 4π-microscope, les deux bras formés entre chacun des objectifs et la lentille de tube forment deux bras d'un système interférométrique. Si une source lumineuse est décalée du foyer des deux objectifs dans une direction latérale, c'est-à-dire dans le plan focal commun des deux objectifs, les deux bras de l'interféromètre voient la source à la même distance et génèrent deux images identiques issues de cette même source. Ces images interfèrent donc constructivement. La résolution latérale d'un 4π-microscope n'est donc pas satisfaisante.

Par ailleurs, l'utilisation de deux objectifs situés de sorte à faire coïncider leurs plans focaux fait que le dispositif est très difficile à aligner et à maintenir dans des conditions d'alignement satisfaisantes. Un tel dispositif est notamment très sensible à la température.

De plus, le positionnement précis des bras de l'interféromètre formé par les faisceaux issus des deux objectifs empêche de parcourir l'échantillon en déplaçant le volume d'observation. Ainsi, l'analyse point par point de l'échantillon ne peut se faire que par déplacement de l'échantillon lui-même, ce qui est plus lent que par déplacement du volume d'observation.

En outre, comme les objectifs ont une distance de travail assez faible, seuls des échantillons peu épais peuvent être positionnés entre les deux objectifs d'un 4π-microscope.

Un but de l'invention est donc d'améliorer la résolution latérale dans un microscope confocal.

Un autre but de l'invention est d'améliorer la résolution latérale en réduisant le volume de détection dans un microscope confocal.

Un autre but de l'invention est de fournir un microscope confocal de bonne résolution latérale et axiale, qui soit stable.

Un autre but de l'invention est de fournir un microscope confocal de bonne résolution latérale et axiale, qui soit simple d'utilisation.

Un autre but de l'invention est de fournir un microscope confocal de bonne résolution latérale et axiale, et pouvant mesurer des fluorescences pour des objets relativement épais.

Un autre but de l'invention est de fournir un microscope confocal de bonne résolution latérale et axiale permettant d'observer un échantillon bioluminescent avec une bonne sensibilité.

Au moins un de ces buts est atteint selon l'invention qui a pour objet un microscope confocal pour imager un échantillon comprenant au moins une source lumineuse, ledit microscope comprenant au moins un objectif et une lentille de tube ayant un foyer image, ledit microscope comprenant des moyens d'interférence agencé pour générer des figures d'interférences à partir de ladite source lumineuse,
dans lequel, lesdits moyens d'interférence comprennent des premiers moyens de génération d'image agencés pour générer une première image de ladite source lumineuse, des deuxièmes moyens de génération d'image agencés pour générer une deuxième image de ladite source lumineuse symétrique de la première image par rapport au foyer image, des moyens d'interférence d'image agencés pour faire interférer ladite première image et ladite deuxième image.

Les moyens d'interférence positionnés dans le microscope confocal selon l'invention comprennent donc des premier moyens de génération d'une première image et des deuxièmes moyens de génération d'une deuxième image, les deux images de la source lumineuse symétriques l'une de l'autre par rapport au foyer image de la lentille de tube. De la sorte, lorsqu'une une source réelle est étendue, notamment du fait de l'excitation non ponctuelle par un laser, elle comprend une partie latérale décalée du point focal objet de l'objectif dans une direction perpendiculaire à l'axe optique de l'objectif. Selon l'invention, cette partie latérale interfère de façon destructive avec une partie latérale d'une source virtuelle symétrique de la source de la source réelle par rapport au foyer de l'objectif. Ce système d'interférence permet donc d'améliorer la résolution latérale du microscope selon l'invention.

On note que dans un 4π-microscope, les interférences n'ont lieu que dans une direction selon l'axe des objectifs. Ainsi, la partie latérale d'une source étendue, c'est-à-dire hors de l'axe optique des objectifs, ne génèrera pas d'interférence puisqu'elle sera vue de la même façon par les deux objectifs. De façon générale, pour une source étendue, notamment du fait de l'excitation non ponctuelle par un laser, un 4π-microscope ne permet pas de générer deux images de la source symétrique par rapport au foyer image de la lentille de tube.

En particulier, dans le microscope confocal susmentionné, ledit au moins un objectif a un axe optique, ladite source lumineuse ayant une composante axiale selon ledit axe optique, et une composante latérale perpendiculaire audit axe optique, et dans lequel, lesdits premiers moyens de génération d'image sont agencés pour générer une première image latérale de ladite composante latérale, lesdits deuxièmes moyens de génération d'image sont agencés pour générer une deuxième image latérale de ladite composante latérale, ladite première image latérale et ladite deuxième image latérale étant symétriques par rapport audit foyer image, lesdits moyens d'interférence d'image étant agencés pour faire interférer ladite première image latérale et ladite deuxième image latérale.

Afin de faciliter l'utilisation du microscope selon l'invention, et notamment afin de rendre optionnelles les fonctionnalités d'amélioration de la résolution latérale, dans le microscope confocal susmentionné, ladite source lumineuse peut être apte à générer un faisceau lumineux ayant au moins un trajet lumineux entre ledit au moins un objectif et ladite lentille, et lesdits moyens d'interférence peuvent être situés entre ledit objectif et ladite lentille de tube, sur ledit trajet lumineux.

De la sorte, par exemple, les moyens d'interférence tels que définis précédemment peuvent être positionnés dans l'un des bras d'un 4π-microscope afin d'améliorer sa résolution latérale.

Afin de générer des images symétriques de la source lumineuse par rapport au foyer de la lentille de tube, dans le microscope confocal susmentionné, lesdits moyens d'interférence peuvent comprendre un premier bras de référence formé d'une lame séparatrice et d'un miroir de référence, et un deuxième bras objet formé de ladite lame séparatrice et d'un système optique de réflexion.

Selon un premier mode de réalisation de l'invention, ledit système optique de réflexion peut comprendre une lentille d'interféromètre et un miroir objet.

Selon un deuxième mode de réalisation de l'invention, ledit système optique de réflexion comprend un coin de cube.

Dans le microscope susmentionné, lesdits premiers moyens de génération d'image peuvent comprendre ledit miroir de référence, lesdits deuxièmes moyens de génération d'image comprennent ledit système optique de réflexion, et lesdits moyens d'interférence d'image peuvent comprendre ladite lame séparatrice.

Avec de tels moyens d'interférence, le bras de référence ne modifie pas le faisceau lumineux reçu, et le bras objet génère un faisceau de sortie symétrique du faisceau incident par rapport au foyer de la lentille d'interféromètre. De la sorte, au niveau du foyer de la lentille de tube, le bras de référence génère une première image non-modifiée de la source lumineuse, et le bras objet génère une deuxième image symétrique de la première image par rapport au foyer de la lentille de tube.

L'association d'une lentille d'interféromètre et d'un miroir objet, ou bien l'utilisation d'un coin de cube permet de réfléchir un faisceau incident de façon symétrique par rapport à un foyer.

Le microscope confocal susmentionné peut comprendre un faisceau de pompe, ladite source lumineuse étant constituée d'au moins une particule fluorescente excitée par ledit faisceau de pompe dans une zone d'excitation focalisée spatialement en sortie dudit objectif, ladite particule fluorescente excitée étant apte à générer une fluorescence, ledit microscope confocal comprenant des moyens de séparation agencés pour séparer ledit faisceau de pompe et ladite fluorescence.

Dans un mode de réalisation du microscope confocal susmentionné, le microscope confocal peut comprendre un unique objectif. Ce mode de réalisation permet d'éviter les inconvénients liés à l'utilisation d'un 4π-microscope, qui comprend deux objectifs, tout en fournissant une bonne résolution latérale et axiale des images obtenues au niveau d'un détecteur en sortie du microscope.

L'invention a également pour objet un procédé pour imager un échantillon comprenant au moins une source lumineuse à partir d'au moins un objectif et d'une lentille de tube ayant un foyer image, ledit procédé comprenant une étape de génération d'interférence consistant à générer des figures d'interférences à partir de ladite source lumineuse,
dans lequel ladite étape de génération d'interférence comprend des sous-étapes consistant à :
- générer une première image de ladite source
- Retourner ladite première image de manière à générer une deuxième image de ladite source lumineuse ;
dans lequel ladite première image et ladite deuxième image étant symétriques par rapport audit foyer image ;
- faire interférer ladite première image et ladite deuxième image.

On décrit maintenant un mode de réalisation de l'invention en référence aux figures annexées dans lesquelles :
- la figure 1 représente un microscope confocal selon l'invention ;
- les figures 2 à 4 illustrent la génération de deux images d'une même source lumineuse symétrique par rapport au foyer image d'une lentille de tube dans un microscope confocal selon l'invention ;
- les figures 5A à 5C illustrent les résolutions spatiales respectivement pour un microscope confocal sans interféromètre, pour un 4π-microscope, et pour un microscope confocal selon l'invention ;
- la figure 6 illustre un autre mode de réalisation de l'invention.

Dans les figures, des références identiques se rapportent à des éléments structurellement similaires.

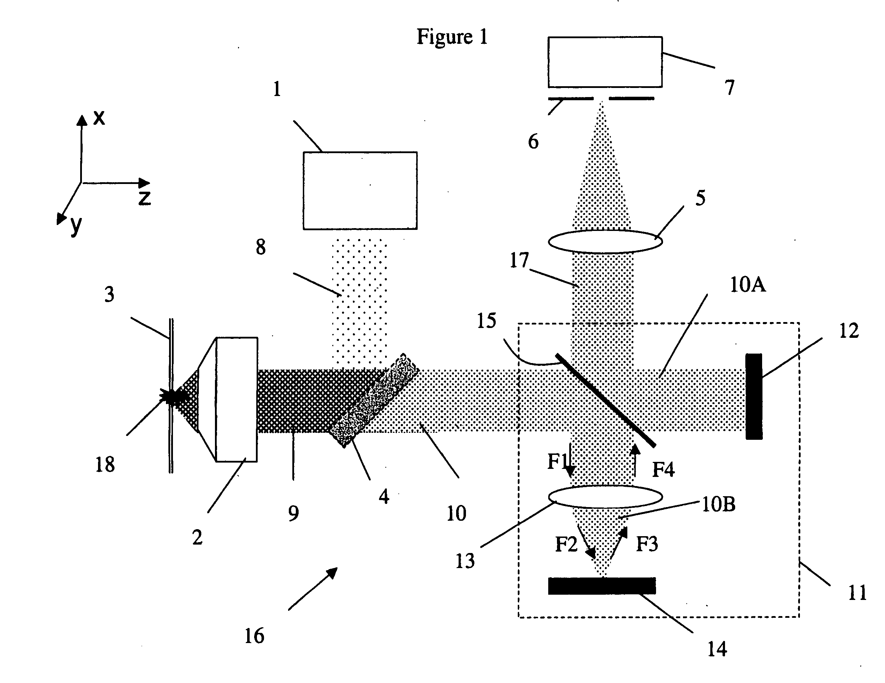

La figure 1 représente un microscope confocal 16 conforme à l'invention.

Le microscope confocal 16 selon l'invention comprend un laser d'excitation 1 apte à émettre un faisceau laser 8 représenté sur la figure 1 par des pointillés de faible densité. Ce faisceau laser 8 est orienté vers un miroir dichroïque 4 apte à réfléchir les faisceaux lumineux et à séparer les faisceaux selon leur longueur d'onde. Le miroir dichroïque 4 réfléchit le faisceau laser 8 vers un objectif 2. L'objectif 2 focalise le faisceau laser réfléchi vers un échantillon 3 comprenant des particules fluorescentes 18. Sous l'effet de l'excitation laser, les particules fluorescentes 18 génèrent à leur tour un faisceau lumineux qui est retransmis vers l'objectif 2. Ce faisceau lumineux est transmis par l'objectif 2 vers le miroir dichroïque 4. La zone comprise entre le miroir dichroïque 4 et l'échantillon 3 est donc une zone de faisceau lumineux constitué d'une part par le faisceau lumineux 8 émis par le laser 1 à une première longueur d'onde, et par le faisceau lumineux généré par l'échantillon à une deuxième longueur d'onde. Le faisceau résultant 9 est représenté par des pointillés de forte densité. Le miroir dichroïque est agencé pour transmettre le faisceau lumineux émis par l'échantillon 3, et transmet donc un faisceau 10 comprenant uniquement la longueur d'onde émise par l'échantillon 3, et plus la longueur d'onde laser. C'est ce faisceau 10 qui doit être analysé par le microscope afin de déterminer les caractéristiques de fluorescence de l'échantillon 3.

Selon l'invention, ce faisceau lumineux 10 généré par une source lumineuse de l'échantillon 3 est transmis vers un interféromètre 11. Cet interféromètre 11 comprend une séparatrice 15 apte à partager le faisceau 10 en deux faisceaux 10A et 10B. Le faisceau 10A est transmis vers le bras de référence de l'interféromètre 11 formé par la séparatrice 15 et un miroir de référence 12. Le miroir de référence 12 réfléchit le faisceau 10A et le renvoie vers la séparatrice 15. Le faisceau 10 B est transmis vers le bras objet de l'interféromètre 11 formé par la séparatrice 15, une lentille 13 et un miroir 14. La lentille 13 focalise le faisceau 10B sur le miroir 14, et le miroir 14 renvoie le faisceau 10B vers la lentille 13. Sur la figure 1, on a représenté des flèches sur le faisceau 10B afin d'illustrer le retournement des éléments du faisceau 10B. En effet, la lentille dirige un élément de faisceau F1 vers le miroir sous la forme d'un élément de faisceau F2. Cet élément de faisceau F2 est ensuite réfléchi selon les lois bien connues de la réflexion en un élément de faisceau F3. Cet élément de faisceau F3 est transformé en un élément de faisceau F4 par l'effet de la lentille 13. On comprend donc qu'une image d'intensité représentée par le faisceau 10B est retournée après son passage par le système optique formé par la lentille 13 et le miroir 14. Cet effet sera décrit plus en détail par la suite.

Les faisceaux lumineux issus du bras de référence et du bras objet de l'interféromètre 11, interfèrent en sortie de la séparatrice 15 sous la forme d'un faisceau 17. Ce faisceau d'interférence 17 est dirigé vers une lentille de tube 5 agencée pour diriger le faisceau 17 vers un trou confocal 6 placé devant une photodiode 7. La photodiode 7 permet de réaliser des mesures d'intensité sur le faisceau 17.

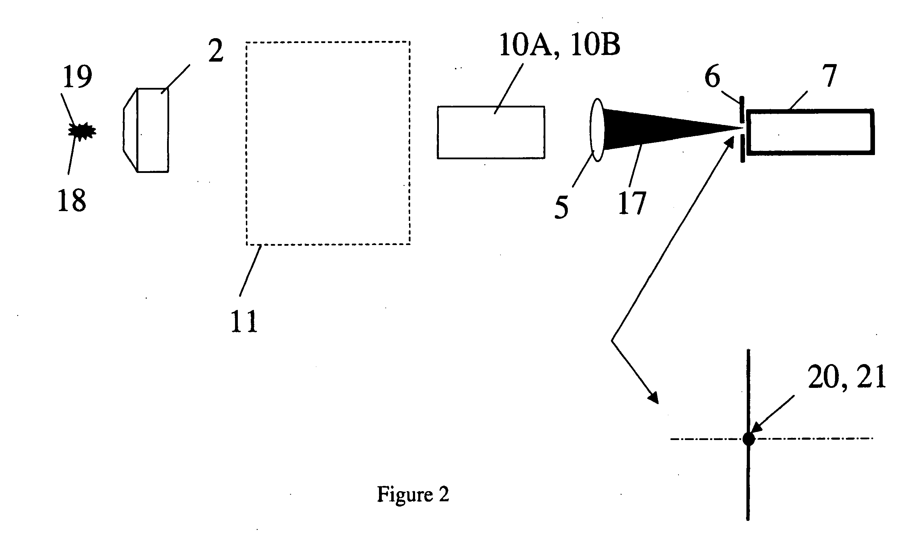

Les figures 2 à 4 illustrent le retournement d'une image par l'effet de l'interféromètre 11 selon l'invention.

Illustré figure 2, lorsqu'une particule fluorescente 18 est parfaitement située au foyer 19 de l'objectif 2, les images générées par les deux bras de l'interféromètre 11 sont identiques et correspondent à des faisceaux 10A et 10B identiques. Dans ce cas, le bras objet de l'interféromètre 11 génère une image 21 de la source lumineuse 18 confondue avec l'image 20 créée par le bras de référence.

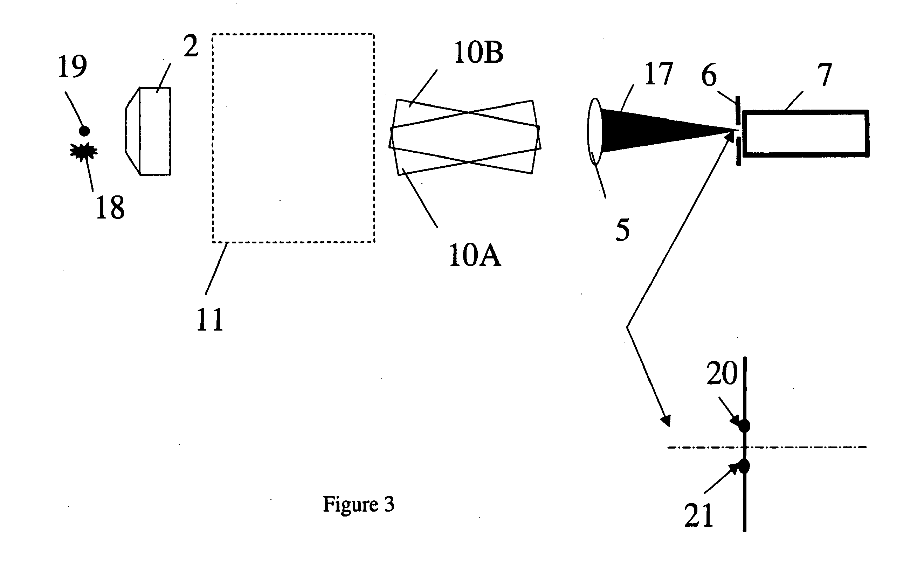

Illustré figure 3, lorsqu'une particule fluorescente 18 est décalée du foyer 19 de l'objectif 2 dans une direction latérale, c'est-à-dire dans le plan focal de l'objectif 2, l'interféromètre 11 génère deux faisceaux 10A et 10B différents. Le bras de référence comprenant le miroir de référence 12 et la séparatrice 15 génère un faisceau 10A ayant une orientation différente du faisceau 10B généré par le bras objet composé de la lentille 13, du miroir 14 et de la séparatrice 15. Conformément aux lois de l'optique, le bras objet de l'interféromètre 11 génère une image 21 qui est symétrique de l'image 20 par rapport au foyer de la lentille de tube 5.

Ainsi, les deux images de la source réelle 18 n'interfèrent pas constructivement au niveau du trou confocal 6 avant la détection par la photodiode 7. De la sorte, l'effet des sources lumineuses 18 qui sont décalées latéralement du foyer 19 de l'objectif est sensiblement diminué par rapport aux sources situées au foyer 19 de l'objectif 2. Ceci fournit donc une bonne résolution latérale du microscope confocal 16 selon l'invention.

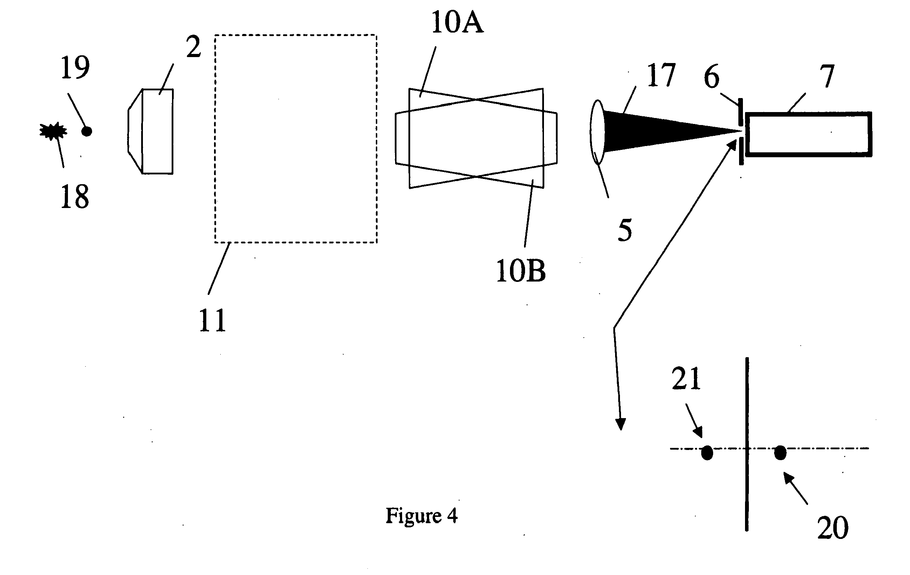

De la même façon, illustré figure 4, lorsqu'une particule fluorescente 18 est décalée du foyer 19 de l'objectif 2 dans une direction axiale, c'est-à-dire selon l'axe optique de l'objectif 2, l'interféromètre 11 génère deux faisceaux 10A et 10B différents. Le bras objet de l'interféromètre 11 génère une image 21 qui est symétrique de l'image 20 par rapport au foyer de la lentille de tube 5.

Les deux images de la source réelle 18 n'interfèrent pas constructivement au niveau du trou confocal 6 avant la détection par la photodiode 7. De la sorte, l'effet des sources lumineuses 18 qui sont décalées axialement du foyer 19 de l'objectif est sensiblement diminué par rapport aux sources situées au foyer 19 de l'objectif 2. Ceci fournit donc également une bonne résolution axiale du microscope confocal 16 selon l'invention.

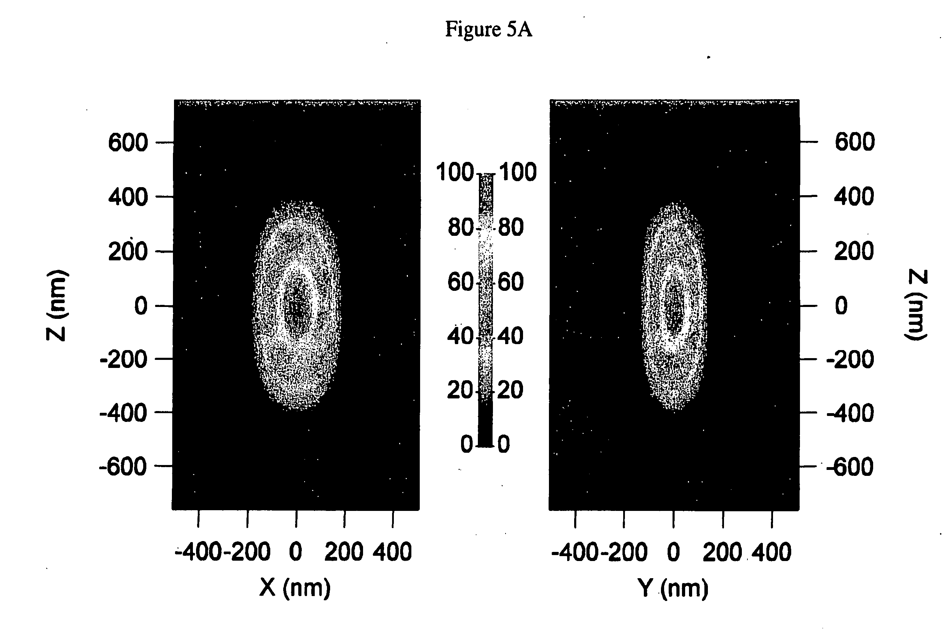

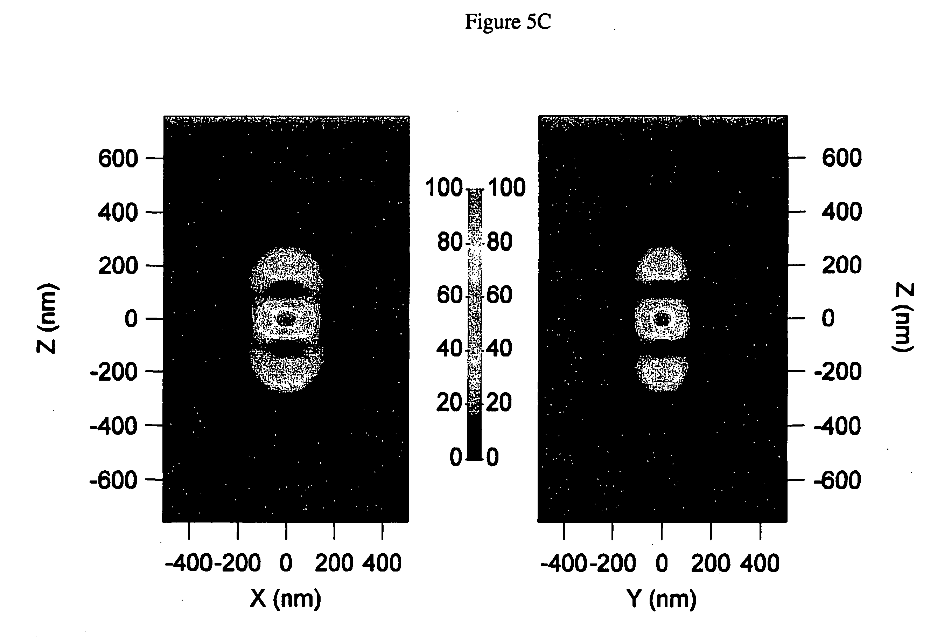

Les figures 5A à 5C représentent des sections de volumes d'observation obtenues pour différents types de microscopes confocaux et notamment le microscope confocal selon l'invention en figure 5C.

La figure 5A représente la résolution obtenue dans les directions latérales x, y et axiale z pour un microscope de type connu ne comprenant pas d'interféromètre, avec une longueur d'onde de fluorescence de 525 nanomètres pour une longueur d'onde d'excitation laser de 488 nanomètres, une ouverture numérique de l'objectif 2 de 1.3, un grossissement de 40, et un diamètre du trou confocal de 20 micromètres.

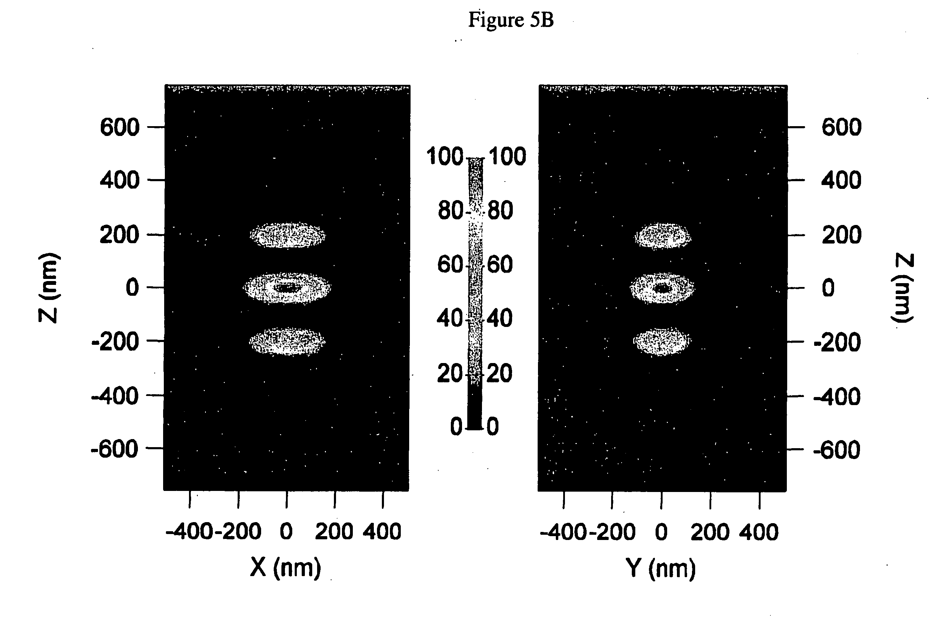

La figure 5B représente la résolution obtenue dans les directions latérales x, y et axiale z pour un 4π-microscope avec une longueur d'onde de fluorescence de 525 nanomètres pour une longueur d'onde d'excitation laser de 488 nanomètres, une ouverture numérique de l'objectif 2 de 1.3, un grossissement de 40, et un diamètre du trou confocal de 20 micromètres. On note que la résolution axiale est meilleure que pour la figure 5A.

La figure 5C représente la résolution obtenue dans les directions latérales x, y et axiale z pour un microscope confocal selon l'invention avec une longueur d'onde de fluorescence de 525 nanomètres pour une longueur d'onde d'excitation laser de 488 nanomètres, une ouverture numérique de l'objectif 2 de 1.3, un grossissement de 40, et un diamètre du trou confocal de 20 micromètres. On note que la résolution axiale est meilleure que pour la figure 5A, et que la résolution latérale est meilleure que celle du 4π-microscope illustré figure 5B. On note que des traitements de l'image obtenue par la photodiode 7 permettent d'améliorer encore la résolution, notamment du fait que les zones d'intensité sont obtenues sont bien distinctes comme cela est visible sur la figure 5C.

Ainsi, la fonction d'efficacité de détection d'une molécule, couramment dénommée MDEF et correspondant au volume d'observation, est améliorée par le microscope confocal selon l'invention.

Par ailleurs, l'interféromètre 11 peut être installé sur n'importe quel type de microscope confocal, y compris dans l'un des bras d'un 4π-microscope afin d'améliorer la résolution latérale de tels microscopes.

En outre, l'invention permet d'obtenir une bonne résolution axiale en évitant l'utilisation d'un 4π-microscope qui possède les inconvénients précités, et notamment l'impossibilité d'utiliser des objets diffusants et épais. Dans ce cas, un microscope selon l'invention possède un unique objectif 2 associé à un interféromètre 11 conformément à la figure 1.

Suivent des variantes de l'invention.

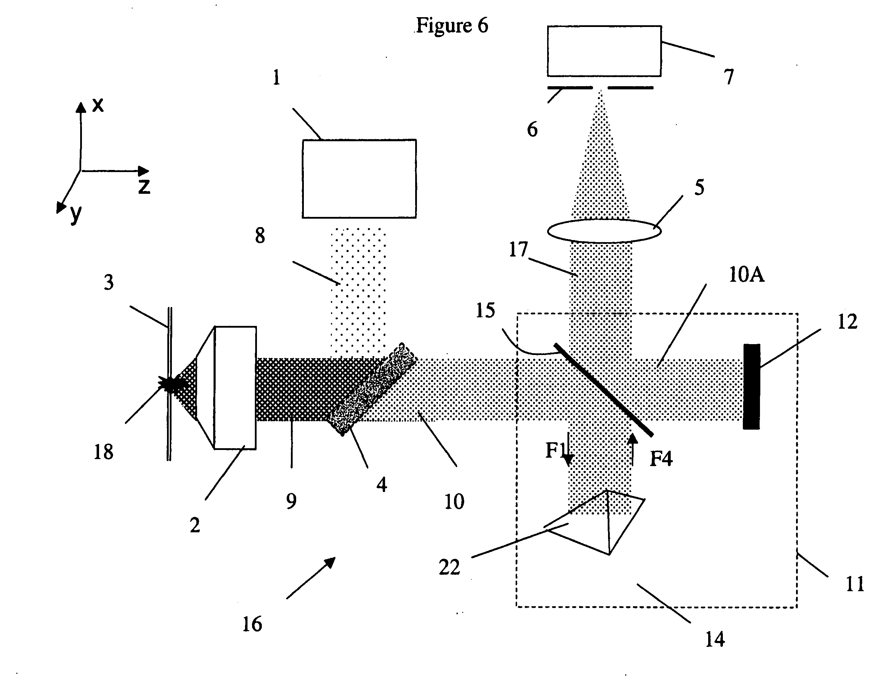

Afin que l'interféromètre 11 génère deux images de la source lumineuse symétriques par rapport au foyer image de la lentille de tube 5, on a décrit un bras objet comprenant une lentille 13 et un miroir 14. Selon une variante de l'invention illustrée figure 6, ces éléments sont remplacés par un coin de cube 22. De façon connue en soi, ce coin de cube 22 génère également une source virtuelle ayant une image, les deux images de la source lumineuse étant symétriques par rapport au foyer image de la lentille de tube 5. Ceci est par exemple illustré par les flèches F1 et F4 qui réalisent un retournement de l'image incidente sur le coin de cube comme pour le système comprenant la lentille 13 et le miroir 14. L'effet du coin de cube est donc équivalent à celui de l'association d'une lentille 13 et d'un miroir 14, et notamment, les mécanismes illustrés en relation avec les figures 3 et 4 sont applicables à un interféromètre 11 comprenant ce coin de cube 22.

Par ailleurs, selon une autre variante de l'invention, on peut se passer du trou confocal 6. En effet, l'effet confocal étant assuré en soi par les interférences générées dans le cadre de l'invention. Dans ce cas, la photodiode 7 de la figure 1 reçoit directement les faisceaux interférents.

## Revendications

1. Microscope confocal (16) pour imager un échantillon (3) comprenant au moins une source lumineuse (18), ledit microscope comprenant au moins un objectif (2) et une lentille de tube (5) ayant un foyer image, ledit microscope (16) comprenant des moyens d'interférence (11) agencés pour générer des figures d'interférences à partir de ladite source lumineuse (18),
**caractérisé en ce que,** lesdits moyens d'interférence (11) comprennent
- des premiers moyens de génération d'image (12) agencés pour générer une première image de ladite source lumineuse,
- des deuxièmes moyens de génération d'image (13, 14, 22) agencés pour générer une deuxième image de ladite source lumineuse symétrique de la première image par rapport au foyer image, les deuxièmes moyens de génération d'image comprenant un système optique de réflexion (13, 14, 22) agencé pour retourner la première image de sorte à générer la deuxième image symétrique de la première image par rapport au foyer image, et
- des moyens d'interférence d'image (15) agencés pour faire interférer ladite première image et ladite deuxième image.

2. Microscope confocal selon la revendication 1, dans lequel ladite source lumineuse est apte à générer un faisceau lumineux (10) ayant au moins un trajet lumineux entre ledit au moins un objectif (2) et ladite lentille de tube (5), dans lequel lesdits moyens d'interférence sont positionnés entre ledit objectif (2) et ladite lentille de tube (5), sur ledit trajet lumineux.

3. Microscope confocal selon la revendication 1 ou 2 dans lequel les moyens d'interférence comprennent au moins deux bras d'interférence, et dans lequel le système optique de réflexion est placé dans un des bras d'interférence.

4. Microscope confocal selon l'une des revendications 1 à 3, dans lequel lesdits moyens d'interférence comprennent un premier bras de référence (12, 15) formé d'une lame séparatrice (15) et d'un miroir de référence (12), et un deuxième bras objet (15, 13, 14) formé de ladite lame séparatrice (15) et du système optique de réflexion (13, 14, 22).

5. Microscope confocal selon l'une des revendications 1 à 4, dans lequel ledit système optique de réflexion comprend une lentille d'interféromètre (13) et un miroir objet (14).

6. Microscope confocal selon l'une des revendications 1 à 4, dans lequel ledit système optique de réflexion comprend un coin de cube (22).

7. Microscope confocal selon l'une des revendications 1 à 6, dans lequel lesdits premiers moyens de génération d'image comprennent ledit miroir de référence (12) et ladite lentille de tube (5), lesdits deuxièmes moyens de génération d'image (13, 14, 22) comprennent ledit système optique de réflexion (13, 14, 22) et ladite lentille de tube (5), et lesdits moyens d'interférence d'image comprennent ladite lame séparatrice (15).

8. Microscope confocal selon l'une des revendications précédentes comprenant un faisceau de pompe, ladite source lumineuse étant constituée d'au moins une particule fluorescente excitée par ledit faisceau de pompe dans une zone d'excitation focalisée spatialement en sortie dudit objectif, ladite particule fluorescente excitée étant apte à générer une fluorescence, ledit microscope confocal comprenant des moyens de séparation agencés (4) pour séparer ledit faisceau de pompe et ladite fluorescence.

9. Microscope confocal selon l'une quelconque des revendications précédentes comprenant un unique objectif (2).

10. Procédé pour imager une source lumineuse (18) à partir d'au moins un objectif (2) et d'une lentille de tube (5) ayant un foyer image, ledit procédé comprenant une étape de génération d'interférence consistant à générer des figures d'interférences à partir de ladite source lumineuse,
**caractérisé en ce que** ladite étape de génération d'interférence comprend des sous-étapes consistant à :
- générer une première image de ladite source lumineuse ;
- retourner ladite première image de manière à générer une deuxième image de ladite source lumineuse symétrique de la première image par rapport audit foyer image ;
- faire interférer ladite première image et ladite deuxième image.

## Claims

1. Confocal microscope (16) for imaging a sample (3) comprising at least one light source (18), said microscope comprising at least one objective (2) and a tube lens (5) having an image focus, said microscope (16) comprising interference means (11) arranged to generate interference figures from said light source (18),
**characterized in that** said interference means (11) comprise
- first image generation means (12) arranged to generate a first image of said light source,
- second image generation means (13, 14, 22) arranged to generate a second image of said light source symmetrical to the first image relative to the image focus, the second image generation means comprising a reflection optical system (13, 14, 22) arranged to return the first image so as to generate the second image symmetrical to the first image relative to the image focus, and
- image interference means (15) arranged to make said first image and said second image interfere.

2. Confocal microscope according to Claim 1, wherein said light source is able to generate a light beam (10) having at least one light path between said at least one objective (2) and said tube lens (5), wherein said interference means are positioned between said objective (2) and said tube lens (5), on said light path.

3. Confocal microscope according to Claim 1 or 2, wherein the interference means comprise at least two interference arms, and wherein the reflection optical system is placed in one of the interference arms.

4. Confocal microscope according to one of Claims 1 to 3, wherein said interference means comprise a first reference arm (12, 15) formed by a separating blade (15) and a reference mirror (12), and a second object arm (15, 13, 14) formed by said separating blade (15) and the reflection optical system (13, 14, 22).

5. Confocal microscope according to one of Claims 1 to 4, wherein said reflection optical system comprises an interferometer lens (13) and an object mirror (14).

6. Confocal microscope according to one of Claims 1 to 4, wherein said reflection optical system comprises one cube corner (22).

7. Confocal microscope according to one of Claims 1 to 6, wherein said first image generation means comprise said reference mirror (12) and said tube lens (5), said second image generation means (13, 14, 22) comprise said reflection optical system (13, 14, 22) and said tube lens (5), and said image interference means comprise said separating blade (15).

8. Confocal microscope according to one of the preceding claims, comprising a pump beam, said light source consisting of at least one fluorescent particle excited by said pump beam in a spatially focussed excitation area at the output of said objective, said excited fluorescent particle being able to generate a fluorescence, said confocal microscope comprising separation means arranged (4) to separate said pump beam and said fluorescence.

9. Confocal microscope according to any one of the preceding claims, comprising a single objective (2).

10. Method for imaging a light source (18) from at least one objective (2) and a tube lens (5) having an image focus, said method comprising an interference generation step consisting in generating interference figures from said light source,
**characterized in that** said interference generation step comprises substeps consisting in:
- generating a first image of said light source;
- returning said first image so as to generate a second image of said light source symmetrical to the first image relative to said image focus;
- making said first image and said second image interfere.

## Patentansprüche

1. Konfokales Mikroskop (16) zum optischen Abbilden einer Probe (3) mit wenigstens einer Lichtquelle (18), wobei das Mikroskop wenigstens ein Objektiv (2) und eine Röhrenlinse (5) umfasst, die einen hinteren Objektivbrennpunkt haben, wobei das Mikroskop (16) Interferenzmittel (11) aufweist, die so angeordnet sind, das sie aus der Lichtquelle (18) Interferenzbilder erzeugen,
**dadurch gekennzeichnet, dass** die Interferenzmittel (11) umfassen
- erste Mittel zur Bilderzeugung (12), die so angeordnet sind, dass die ein erstes Bild von der Lichtquelle erzeugen,
- zweite Mittel zur Bilderzeugung (13, 14, 22) die so angeordnet sind, dass sie ein zweites Bild von der Lichtquelle erzeugen, das in Bezug zu dem hinteren Objektivbrennpunkt symmetrisch zum ersten Bild ist, wobei die zweiten Mittel zur Bilderzeugung ein optisches Reflexionssystem (13, 14, 22) umfassen, das so angeordnet ist, dass das erste Bild zurückgelenkt wird, so dass das zweite Bild in Bezug zu dem hinteren Objektivbrennpunkt symmetrisch zum hinteren Objektivbrennpunkt erzeugt wird, und
- Bildinterferenzmittel (15), die so angeordnet sind, dass die das erste Bild und das zweite Bild einander überlagern.

2. Konfokales Mikroskop nach Anspruch 1, in welchem die Lichtquelle so ausgelegt ist, dass diese ein Lichtbündel (10) mit wenigstens einem Lichtweg zwischen dem wenigstens einen Objektiv (2) und der wenigstens einen Röhrenlinse (5) erzeugt, in welchem die Interferenzmittel zwischen dem Objektiv (2) und der Röhrenlinse (5) auf dem Lichtweg positioniert sind.

3. Konfokales Mikroskop nach Anspruch 1 oder 2, in welchem die Interferenzmittel wenigstens zwei Interferenzarme umfassen und in welchem das optische Reflektionssystem in den Interferenzarmen angeordnet ist.

4. Konfokales Mikroskop nach einem der Ansprüche 1 bis 3, in welchem die Interferenzmittel aufweisen einen ersten Referenzarm (12, 15), der einen Strahlteiler (15) und einen Referenzspiegel (12) bildet, und einen zweiten Objektarm (15, 13, 14), der aus dem Strahlteiler (15) und dem optischen Reflektionssystem (13, 14, 22) gebildet wird.

5. Konfokales Mikroskop nach einem der Ansprüche 1 bis 4, in welchem das optische Reflektionssystem eine Interferometerlinse (13) und einen Objektspiegel (14) umfasst.

6. Konfokales Mikroskop nach einem der Ansprüche 1 bis 4, in welchem das optische Reflektionssystem eine Kubusecke (22) umfasst.

7. Konfokales Mikroskop nach einem der Ansprüche 1 bis 6, in welchem die ersten Bilderzeugungsmittel den Referenzspiegel (12) und die Röhrenlinse (5) umfassen, wobei die zweiten Bilderzeugungsmittel (13, 14, 22) das optische Reflektionssystem (13, 14, 22) und die Röhrenlinse (5) umfassen, und die Bild- Interferenzmittel den Strahlungsteiler (15) umfassen.

8. Konfokales Mikroskop nach einem der vorhergehenden Ansprüche, mit einem Pumpenstrahl, wobei die Lichtquelle aus wenigstens einem fluoreszierenden Teilchen gebildet wird, das durch den Pumpenstrahl in einer Anregungszone angeregt wird, die räumlich am Ausgang des Objektivs fokussiert ist, wobei das angeregte fluoreszierende Teilchen so ausgelegt ist, dass es eine Fluoreszenz erzeugt, wobei das konfokale Mikroskop Teilungsmittel (4) aufweist, die so angeordnet sind, das sie den Pumpenstrahl und die Fluoreszenz teilen.

9. Konfokales Mikroskop nach einem der vorhergehenden Ansprüche mit einem einzigen Objektiv (2).

10. Verfahren zum optischen Abbilden einer Lichtquelle (18) ausgehend von wenigstens einem Objektiv (2) und einer Röhrenlinse (5), die einen hinteren Objektivbrennpunkt haben, wobei das Verfahren einen Schritt zur Interferenzerzeugung umfasst, der darin besteht, Interferenzbilder aus der Lichtquelle zu erzeugen
**dadurch gekennzeichnet, dass** der Interferenzerzeugungsschritt Unterschritte umfasst, die darin bestehen:
- Erzeugen eines ersten Bildes der Lichtquelle;
- Zurücklenken des ersten Bildes, um ein zweites Bild der Lichtquelle zu erzeugen, das symmetrisch zu dem ersten Bild in Bezug zu dem hinteren Objektivbrennpunkt ist;
- Überlagern des ersten Bildes und des zweiten Bildes.
